# EUROPEAN PATENT SPECIFICATION

(11) **EP 1 178 453 B1**
(45) Date of publication and mention of the grant of the patent: **14.07.2004**
(21) Application number: 01304593.5
(22) Date of filing: 24.05.2001
(51) Int. Cl.: G08B 1/08, G06F 17/60

(54) **Wireless search device**
Drahtloses Suchgerät
Dispositif de recherche sans fil

(30) Priority: 28.07.2000 JP 2000228905
(43) Date of publication of application: 06.02.2002
(73) Proprietor: SHARP KABUSHIKI KAISHA, Osaka-shi, Osaka-fu 545-0013 (JP)
(72) Inventor: Sumida, Yoshiaki, Chiba-shi, Chiba (JP)
(74) Representative: Brown, Kenneth Richard

(56) References cited:
- DE-A- 19 748 048
- DE-A- 19 818 885

## Description

### Field of the Invention

The present invention relates to awireless search device for notification by wireless that one or a plurality of search apparatuses with each identification code, which is in accordance with each predetermined code, appear within a receive-enable range.

### Description of the Prior Art

Conventionally, when a person is going to meet other people, faces of a lot of people present at a meeting place have been distinguished, using eyes of the above person. Therefore, when the above person is going to meet another person for the first time, the above person is required to prepare, for example, something for identification, and, also, to continue searching for the other party whom the above person is going to meet till their arrival.

Though there has been a method as one means for assisting in the meeting where the identification of the above other party with regard to the position is performed using cellular telephones and so on at a meeting place, it is difficult to say that the above method is efficient due to telephone bills required.

On the other hand, one of technologies for assisting by wireless in the meeting has been disclosed in Japanese patent application Laid-open Hei 5 No. 14380. The above technology is based on detection of arrival of the other party by wireless transmission and reception of identification codes. That is, both sides of parties who are going to meet each other have each search apparatus, and the same identification code is configured to be previously input to the above apparatuses of the both sides. When the both sides are approaching each other within a predetermined distance, search apparatuses transmit identification codes by wireless; a search apparatus which receives the above identification code identify whether the above code is in accordance with that previously input and is configured to notify by using notification voice that the other party is coming, when the above code is in accordance with that previously input.

However, in the technology disclosed in Japanese patent application Laid-open Hei 5 No. 14380, when a plurality of parties are going to meet each other at one place, and the other people of each party simultaneously arrive there (it is assumed that the above situations are more likely to occur, for example, at meeting places in front of railway stations), the parties are still required to search for the other party, using their own eyes in order to identify the positions of the other party, as the notification voice is the same. Moreover, the same identification code is required to be determined again for inputting it into the search apparatuses in order to meet again a person as the other party after the previous meeting after which there were a meeting with another person, other than the other party, using another identification code. Furthermore, there has been no consideration to cases where a person is going to meet a plurality of the other parties.

### SUMMARY OF THE INVENTION

The present invention has been made to solve the above problems, and its object is to provide a wireless search device, when both parties with each search apparatus encounter each other at a meeting place, it is possible to distinguish the other party with the above search apparatus by making the same notification voice and announcing sound different from that of other search apparatuses, and, at the same time, the above search apparatuses may be also used for meeting with a plurality of the other parties in the same manner as that of the case for meeting with one person.

In order to achieve the above object, the present invention is configured as follows.

In accordance with, the first aspect of the present invention, a wireless search device comprises:
identification code storage means for storing an identification code;
identification code input means for inputting an identification code;
applicable notification voice data storage means for storing notification voice data to be applied for notification;
communication means for automatic transmission and reception of an identification code and notification voice data;
identification code identifying means for identifying whether the identifying code received through the above communication means is in accordance with a code stored in the above identification code storage means; and
notification means for notifying arrival of the other party by notification voice data stored in the above applicable notification voice storage means in the case of completion of identification with the above identification code identifying means, and is characterized in that
the notification voice data are automatically transmitted after completion of one-way or two-way identification with the above identification code identifying means at encounter with the other party in search, and arrival of the above party notified by making the same notification voice at the both sides.

In accordance with the second aspect of the present invention, the wireless search device described in the above first feature is characterized in that it further comprises:
notification voice storage means for storing a plurality of notification voice data; and
notification voice input/selection means for inputting notification voice data in the above notification voice storage means, selection of one of a plurality of notification voice data stored in the above notification voice storage means, and storing it in the above applicable notification voice storage means.

In accordance with the third aspect of the present invention, the wireless search device described in the above first freature is characterized in that it further comprises:
previous identification code storage means for storing identification codes applied for the previous identification, and for forwarding of an identification code to be applied for the coming meeting to the above identification code storage means, and
identification code selection means for selecting an identification code to be applied for the coming meeting from the identification codes stored in the above previous identification code storage means.

In accordance with the fourth aspect of the present invention, the wireless search device described in the above second feature is characterized in that it further comprises:
previous identification code storage means for storing an identification code applied for the previous identification, and for forwarding of an identification code to be applied for the coming meeting to the above identification code storage means, and
identification code selection means for selecting an identification code to be applied for the coming meeting from the identification codes stored in the above previous identification code storage means.

In accordance with the fifth aspect of the present invention, the wireless search device described in the above first feature is characterized in that, when, after the previous identification for a person as the other party, the above person is required to be searched again, the identification code applied for the previous identification may be reapplied.

In accordance with the sixth aspect of the present invention, the wireless search device described in the above second feature is characterized in that, when, after the previous identification for a person as the other party, the above person is required to be searched again, the identification code applied for the previous identification may be reapplied.

In according with the seventh aspect of the present invention, the wireless search device described in the above third feature is characterized in that, when, after the previous identification for a person as the other party, the above person is required to be searched again, the identification code applied for the previous identification may be reapplied.

In accordance with the eighth aspect of the present invention, the wireless search device described in the above fourth feature is characterized in that, when, after the previous identification for a person as the other party, the above person is required to be searched again, the identification code applied for the previous identification may be reapplied.

In accordance with the ninth aspect of the present invention, the wireless search device described in the above first feature is characterized in that the above identification code storage means may store a plurality of identification codes.

In accordance with the tenth aspect of the present invention, the wireless search device described in the above second feature is characterized in that the above identification code storage means may store a plurality of identification codes.

In accordance with the eleventh aspect of the present invention, the wireless search device described in the above third feature is characterized in that the above identification code storage means may store a plurality of identification codes.

In accordance with the twelfth aspect of the present invention, the wireless search device described in the above fourth feature is characterized in that the above identification code storage means may store a plurality of identification codes.

### BRIEF DESCRIPTION OF THE DRAWINGS

FIG. 1 is a system block diagram of one embodiment of a wireless search device according to the present invention;
FIG. 2 is a flow chart of operations for meeting with single person as the other party; and
FIG. 3 is a flow chart of operations for meeting with a plurality of people as the other party.

### DESCRIPTION OF THE PREFERABLE EMBODIMENTS

Hereinafter, one embodiment of a wireless search device according to the present invention will be described in details, referring to drawings . Here, though the Bluetooth technology is applied for a wireless part, the technology for the wireless part is not limited to the Bluetooth one.

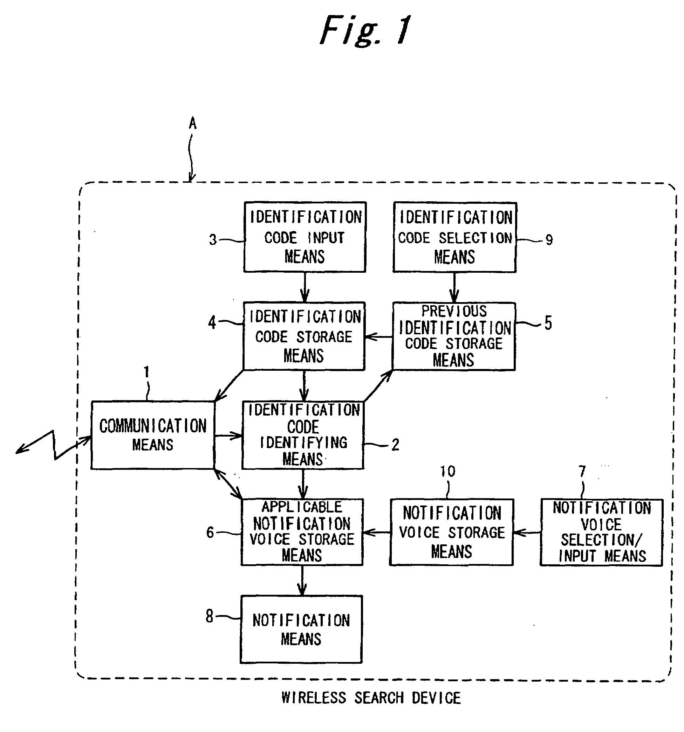

In FIG. 1, the wireless search device according to the present embodiment comprises: communication means 1; identification code identifying means 2; identification code input means 3; identification code storage means 4; previous identification code storage means 5; applicable notification voice storage means 6; notification voice selection/input means 7; notification means 8; identification code selection means 9; and notification voice storage means 10.

The above communication means 1 performs transmission and reception of identification codes and notification voice data. The above identification code identifying means 2 identifies whether a received identification code is in accordance with a code stored in the owned search apparatus. The above identification code input means 3 inputs an identification code to be applied when meeting with other people having a search apparatus is performed for the first time. The above identification code storage means 4 stores identification codes to be applied for identification operation of one or a plurality of search apparatuses of one or a plurality of the other parties for the meeting.

The above previous identification code storage means 5 stores the identification codes used for identification of search apparatuses of the other party at the previous meeting, and forwards an identification code to be applied for the coming meeting to the above identification code storage means 4. The applicable notification voice storage means 6 stores notification voice data to be applied for the coming meeting, among those received from other search apparatuses, or those previously input in the owned search apparatus. The above notification voice selection/input means 7 inputs new notification voice data to the above notification voice storage means 10, and, further, selects, from the notification voice data which have been previously input to the above notification voice storage means 10, notification voice data to be stored in the above applicable notification voice storage means 6 and to be applied for the coming meeting.

The above notification means 8 notifies the arrival of the other party to the owner of the search apparatus, applying the notification voice data received from the applying notification voice storage means 6. The identification code selection means 9 selects , from the identification codes which have been stored in the above previous identification code storage means 5, an identification code to be forwarded for the coming meeting to the identification code storage means 4. The above notification voice storage means 10 stores the notification voice data.

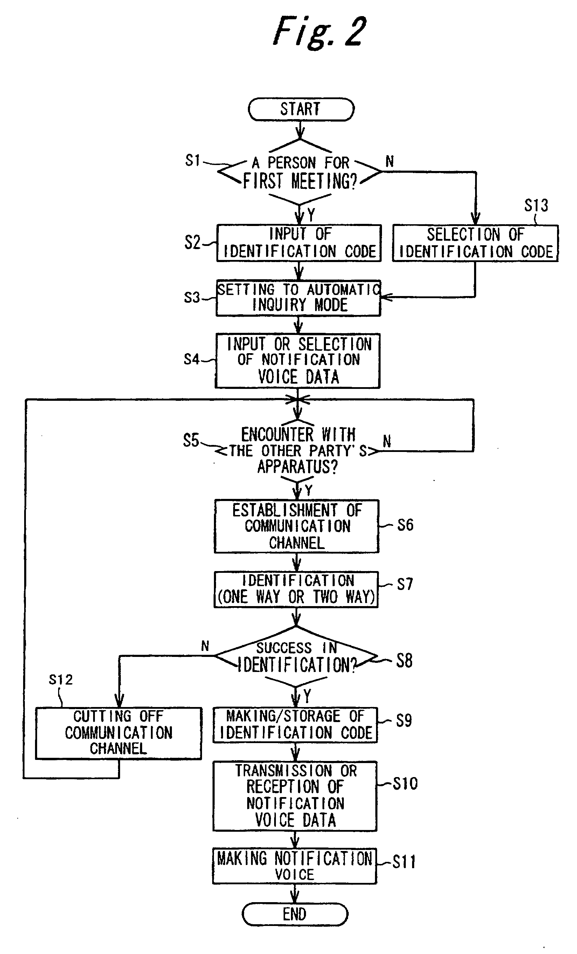

Then, the operations will be described, referring to FIG. 2. First of all, there will be described the operations for a meeting case where there has so far been no experience in meeting with a person as the other party, using the wireless search device (search apparatus) according to the present embodiment, that is, the answer is YES for the identification at STEP S1 whether the meeting with the other party is a first one.

In the above case, the same identification code (PIN (Personal Identification Number) code for the Bluetooth technology) is previously determined between both parties, and the identification code is input to the above identification code storage means 4 of each search apparatus (STEP S2), using identification code input means 3. In addition, each search apparatus is set to an automatic inquiry mode (STEP S3). Here, the above automatic inquiry mode is a periodic inquiry mode in the Bluetooth technology, where an inquiry (requesting information necessary for connection to search apparatuses in the vicinity), and inquiry scanning (scanning whether information necessary for connection is requested) are repeated at regular intervals.

Then, in any one of or both of search apparatuses for the meeting, any one of the notification voice data, which have been previously input in the above notification voice storage means 10 using the above notification voice selection/input means 7, is selected (STEP S4).

When the both parties with each search apparatus encounter with each other at a meeting place (STEP S5), the above communication means 1 firstly establishes a communication channel (STEP S6). In the Bluetooth technology, the communication channel is established by inquiry done by any one of the search apparatuses and subsequently by paging.

Thereafter, the operation of identification is performed at any one of the above apparatuses, or is mutually done at both apparatuses (STEP S7). The meeting side undergoing the identification (hereinafter, called as C) transmits an identification code to be stored in the above identification code storage means 4 to the side performing the identification (hereinafter, called as V) , using the above communication means 1. After receiving the above code, V performs the identification in the above identification code identifying means 2, using the received identification code and the identification code stored in the identification code storage means 4 of the owned search apparatus. When the identification is mutually done, C performs the identification of V just after completion of the identification of C by V.

A new identification code is made between the search apparatuses after completion of the identification (STEP S8); and the identification code used is named, using, for example, the name of the other party so as to facilitate easy identification by users and stored in the previous identification code storage means 5 (STEP S9). The above operations are configured to be performed so that the identification code is not to be required to be input again in the case of future meeting with people having the related search apparatuses.

Then, any one of search apparatuses (for example, the search apparatus V performing identification in first, or a search apparatus previously inputting the notification voice data) (hereinafter, called as S) transmits the notification voice data stored in the above notification voice storage means 6 to the search apparatus of the other party (STEP S10), and notifies, using the notification means 8, that the other party for the meeting has arrived (STEP S11). On the other hand, the search apparatus (hereinafter, called as D) which receives the notification voice data transmitted stores the received notification voice data in the applicable notification voice storage means 6 of the above received search apparatus, and, thereafter, notifies with the notification means 8 of D, applying the same notification voice as that of S, that the other party has arrived. As a result, it becomes possible to distinguish the other party based on the voice without distinguishing each face of a lot of people present in the vicinity, as S and D notify, applying the same notification voice, that the other party has come.

However, in the case of failed identification at STEP S8, the above communication means 1 cuts off the communication channel (STEP S11), and the operation is returned to the automatic inquiry mode again.

Now, there will be described a case where meeting with the other party using the wireless search device according to the present embodiment has been performed before. In the above case, instead of input of the identification codes as described in the above example, the identification code of the search apparatus of the other party among the previous identification codes stored in the above previous identification code storage means 5 is selected using the above identification code selection means 9, and is stored in the above identification code storage means 4 (STEP S13). The subsequent steps are similar to those of the above operations.

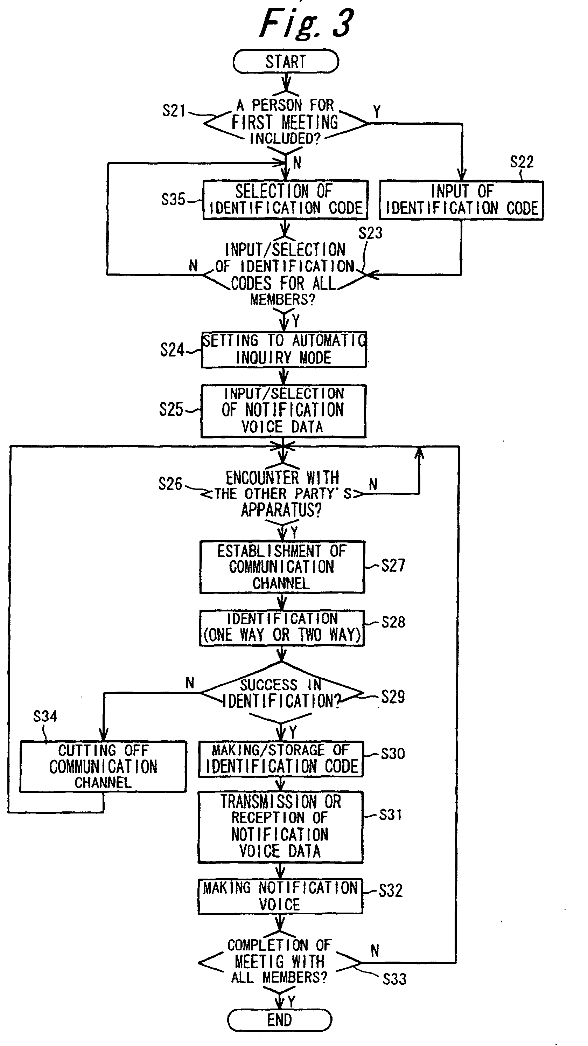

Then, a case where meeting with a plurality of the other party is performed will be described, referring to a flow chart of FIG. 3.

In the above case, when first meeting with a person as the other party using the search apparatus according to the present embodiment is included, the same identification code is previously decided among both sides, and is input to the above identification code storage means 4 (STEP S22), using the above identification code input means 3, in a similar manner to that of the previous example. And, in the case of a person as the other party side who has had performed a meeting before, using the search apparatus according to the present embodiment, the corresponding identification code is selected with the identification code selection means 9 from the above previous identification code storage means 5, and input to the above identification code storage means 4 (STEP S35).

Moreover, input/selection of the notification voice data is performed for some or all the search apparatuses with the above notification voice selection/input means 7 (Step S25). When people having each search apparatus encounter with each other at a meeting place, an arbitrary search apparatus (hereinafter, called as A) among the above apparatuses establishes a communication channel with another arbitrary search apparatus (this one is the first one responding to the inquiry of A, and, hereinafter, called as B) (STEP S27), and identification and notification voice data are transmitted (STEP S28-S31) in a similar manner to that of the operations shown in FIG. 2. Thereafter, when meeting with all the people as the other party has not been completed, the search apparatus A or B inquires again whether other search apparatuses with undone meeting are present in the vicinity. When there is another search apparatus (hereinafter, called as C), the identification and the notification voice data are forwarded to C (STEPs S27-S31) in a similar method to that of the above embodiment. Here, when notification voice data are transmitted from A to C, and, moreover, C has already transmitted notification voice data to another search apparatuses (hereinafter, called as D), or, received notification voice data from D, C transmits the notification voice data received from A to D again. By the above steps, all the search apparatuses undergoing meeting become possible to make the same notification voice. Thereby, it is possible to identify the other party based on the voice even in the case of meeting with many people.

As described above, the wireless search device according to the embodiment of the present invention is possible to be made small. And, when the wireless search device according to the present invention is realized by using the Bluetooth technology, the above device may be more easily mounted onto cellular telephones, personal digital assistances and so on. Therefore, when a cellular telephone, and/or a personal digital assistance, applying the Bluetooth technology, are carried, there is no need to separately carry the search apparatus for meeting, other than the above telephone and/or assistance.

As described in detail, according to the present invention, when the other party appears within a communicable range at meeting, the above appearance is notified. Therefore, there is no need to distinguish faces of people at a meeting place one by one till arrival of the other party. And, when the other party arrives at a meeting place, and a search apparatus detects the above arrival, the same notification voice may be made by transmission of the notification voice data from one side. Therefore, it becomes possible to search for the other party based on the notification voice, and improved convenience may be obtained, compared with that of conventional search apparatuses.

Moreover, the notification voice data stored in each search apparatus are transmitted. Therefore, there are different notification voices, even if people of each party encounter at the same time at the same place when a plurality of parties are going to meet each other at one place, and it becomes easier to search for the other party by use of the above different voices.

Furthermore, new identification code for the other party having the previous meeting is made for storage, based on the identification code applied at the previous meeting, and may be applied for the subsequent meeting. Therefore, there is no need to input the identification code for every meeting with the other party, and improved convenience may be obtained. In addition, for meeting with a plurality of the other parties, all the identification codes for each of the other party are stored, and each identification of each search apparatus is performed. Therefore, it becomes possible to make meeting with a plurality of the other parties.

## Claims

1. A wireless search device, comprising:
identification code storage means for storing an identification code;
identification code input means for inputting an identification code;
applicable notification voice storage means for storing notification voice data to be applied for notification;
communication means for automatic transmission and reception of an identification code and notification voice data;
identification code identifying means for identifying whether the identification code received with said communication means is in accordance with a code stored in said identification code storage means; and
notification means for notifying arrival of the other party by notification voice data stored in said applicable notification voice storage means in the case of completion of identification with said identification code identifying means, and **characterized in that**
the notification voice data are automatically transmitted after completion of mutual identification with said identification code identifying means at encounter with the other party in search, and arrival of said party notified by making the same notification voice at the both sides.

2. A wireless search device according to claim 1, further comprises:
notification voice storage means for storing a plurality of notification voice data; and
notification voice input/selection means for inputting notification voice data in said notification voice storage means, selection of one of a plurality of notification voice data stored in said notification voice storage means, and storing it in said applicable notification voice storage means.

3. A wireless search device according to claim 1, further comprises:
previous identification code storage means for storage of identification codes applied for the previous identification, and for forwarding of an identification code to be applied for the coming meeting to said identification code storage means, and
identification code selection means for selecting an identification code to be applied for the coming meeting from the identification codes stored in said previous identification code storage means.

4. A wireless search device according to claim 2, further comprises:
previous identification code storage means for storing an identification code applied for the previous identification, and for forwarding of an identification code to be applied for the coming meeting to said identification code storage means, and
identification code selection means for selecting an identification code to be applied for the coming meeting from the identification codes stored in said previous identification code storage means.

5. A wireless search device according to claim 1, wherein,
when, after the previous identification for a person as the other party, said person is required to be searched again, the identification code applied for the previous identification may be reapplied.

6. A wireless search device according to claim 2, wherein,
when, after the previous identification for a person as the other party, said person is required to be searched again, the identification code applied for the previous identification may be reapplied.

7. A wireless search device according to claim 3, wherein,
when, after the previous identification for a person as the other party, said person is required to be searched again, the identification code applied for the previous identification may be reapplied.

8. A wireless search device according to claim 4, wherein,
when, after the previous identification for a person as the other party, said person is required to be searched again, the identification code applied for the previous identification may be reapplied.

9. A wireless search device according to claim 1, wherein
said identification code storage means may store a plurality of identification codes.

10. A wireless search device according to claim 2, wherein
said identification code storage means may store a plurality of identification codes.

11. A wireless search device according to claim 3, wherein
said identification code storage means may store a plurality of identification codes.

12. A wireless search device according to claim 4, wherein
said identification code storage means may store a plurality of identification codes.

13. A wireless search device including a system for identifying a match between a stored predetermined ID code and a received ID code and for notifying to the user proximity of the device which has transmitted the received ID code using notification voice data, the system being arranged to automatically transmit the notification voice data to the proximate device in response to the match, to enable the mutual proximity of the two devices to be notified to their respective users using the same said notification voice data.

## Patentansprüche

1. Drahtloses Suchgerät mit:
- einer Kennungscode-Speichereinrichtung zum Speichern eines Kennungscodes;
- einer Kennungscode-Eingabeeinrichtung zum Eingeben eines Kennungscodes;
- einer Anwendbare-Mitteilungssprache-Speichereinrichtung zum Speichern von Mitteilungs-Sprachdaten, die zur Mitteilung zu verwenden sind;
- einer Kommunikationseinrichtung zum automatischen Senden und Empfangen eines Kennungscodes und von Mitteilungs-Sprachdaten;
- einer Kennungscode-Erkennungseinrichtung zum Erkennen, ob der mit der Kommunikationseinrichtung empfangene Kennungscode in Übereinstimmung mit einem in der Kennungscode-Speichereinrichtung gespeicherten Code steht; und
- einer Mitteilungseinrichtung zum Mitteilen des Eintreffens der anderen Partei mittels in der Anwendbare-Mitteilungsprache-Speichereinrichtung gespeicherter Mitteilungs-Sprachdaten im Fall des Abschlusses der Erkennung durch die Kennungscode-Erkennungseinrichtung;
und **dadurch gekennzeichnet, dass**
- die Mitteilungs-Sprachdaten nach Abschluss der wechselseitigen Erkennung mittels der Kennungscode-Erkennungseinrichtung beim Zusammentreffen mit der anderen, gesuchten Partei automatisch gesendet werden und das Eintreffen der Partei dadurch mitgeteilt wird, dass auf beiden Seiten die Mitteilungssprache gleich gemacht wird.

2. Drahtloses Suchgerät nach Anspruch 1, ferner mit:
- einer Mitteilungssprache-Speichereinrichtung zum Speichern mehrerer Mitteilungs-Sprachdaten; und
- einer Mitteilungssprache-Eingabe/Auswähl-Einrichtung zum Eingeben von Mitteilungs-Sprachdaten in die Mitteilungssprache-Speichereinrichtung, zum Auswählen einer der mehreren in dieser gespeicherten Mitteilungs-Sprachdaten und zum Einspeichern derselben in der Anwendbare-Mitteilungssprache Speichereinrichtung.

3. Drahtloses Suchgerät nach Anspruch 1, ferner mit:
- einer Voriger-Kennungscode-Speichereinrichtung zum Speichern von Kennungscodes, die zur vorigen Erkennung verwendet wurden, und zum Weiterleiten eines für ein kommendes Treffen zu verwendenden Kennungscodes an die Kennungscode-Speichereinrichtung; und
- einer Kennungscode-Auswähleinrichtung zum Auswählen eines beim kommenden Treffen anzuwendenden Kennungscodes aus den in der voriger-Kennungscode-Speichereinrichtung gespeicherten Kennungscodes.

4. Drahtloses Suchgerät nach Anspruch 2, ferner mit:
- einer Voriger-Kennungscode-Speichereinrichtung zum Speichern von Kennungscodes, die zur vorigen Erkennung verwendet wurden, und zum Weiterleiten eines für ein kommendes Treffen zu verwendenden Kennungscodes an die Kennungscode-Speichereinrichtung; und
- einer Kennungscode-Auswähleinrichtung zum Auswählen eines beim kommenden Treffen anzuwendenden Kennungscodes aus den in der voriger-Kennungscode-Speichereinrichtung gespeicherten Kennungscodes.

5. Drahtloses Suchgerät nach Anspruch 1, bei dem der für die vorige Erkennung verwendete Kennungscode wieder verwendet werden kann, wenn nach der vorigen Erkennung einer Person als anderen Partei diese Person erneut gesucht werden muss.

6. Drahtloses Suchgerät nach Anspruch 2, bei dem der für die vorige Erkennung verwendete Kennungscode wieder verwendet werden kann, wenn nach der vorigen Erkennung einer Person als anderen Partei diese Person erneut gesucht werden muss.

7. Drahtloses Suchgerät nach Anspruch 3, bei dem der für die vorige Erkennung verwendete Kennungscode wieder verwendet werden kann, wenn nach der vorigen Erkennung einer Person als anderen Partei diese Person erneut gesucht werden muss.

8. Drahtloses Suchgerät nach Anspruch 4, bei dem der für die vorige Erkennung verwendete Kennungscode wieder verwendet werden kann, wenn nach der vorigen Erkennung einer Person als anderen Partei diese Person erneut gesucht werden muss.

9. Drahtloses Suchgerät nach Anspruch 1, bei dem die Kennungscode-Speichereinrichtung mehrere Kennungscodes speichern kann.

10. Drahtloses Suchgerät nach Anspruch 2, bei dem die Kennungscode-Speichereinrichtung mehrere Kennungscodes speichern kann.

11. Drahtloses Suchgerät nach Anspruch 3, bei dem die Kennungscode-Speichereinrichtung mehrere Kennungscodes speichern kann.

12. Drahtloses Suchgerät nach Anspruch 4, bei dem die Kennungscode-Speichereinrichtung mehrere Kennungscodes speichern kann.

13. Drahtloses Suchgerät mit einem System zum Erkennen einer Übereinstimmung zwischen einem abgespeicherten, vorbestimmten ID-Code und einem empfangenen ID-Code und zum Informieren des Benutzers unter Verwendung von Mitteilungs-Sprachdaten über die Nähe der Vorrichtung, die den empfangenen ID-Code gesendet hat, wobei das System so ausgebildet ist, dass es die Mitteilungs-Sprachdaten automatisch in Reaktion auf die Übereinstimmung an das in der Nähe befindliche Gerät sendet, um es zu ermöglichen, die wechselseitige Nähe der zwei Geräte den jeweiligen Benutzern unter Verwendung derselben Mitteilungs-Sprachdaten mitzuteilen.

## Revendications

1. Dispositif de recherche sans fil, comportant :
des moyens de stockage de code d'identification pour stocker un code d'identification ;
des moyens d'entrée de code d'identification pour entrer un code d'identification ;
des moyens de stockage de données vocales de notification applicables pour stocker des données vocales de notification à appliquer à des fins de notification ;
des moyens de communication pour la transmission et la réception automatiques d'un code d'identification et de données vocales de notification ;
des moyens d'identification de code d'identification pour déterminer si le code d'identification reçu avec lesdits moyens de communication est conforme à un code stocké dans lesdits moyens de stockage de code d'identification ; et
des moyens de notification pour signaler l'arrivée de l'autre partie au moyen de données vocales de notification stockées dans lesdits moyens de stockage de données vocales de notification applicables en cas d'achèvement d'identification avec lesdits moyens d'identification de code d'identification ; et **caractérisé en ce que**
les données vocales de notification sont transmises automatiquement après l'achèvement de l'identification mutuelle avec lesdits moyens d'identification de code d'identification lors de la rencontre avec l'autre personne de la recherche, et l'arrivée de ladite partie est signalée par la production des mêmes données vocale des deux côtés.

2. Dispositif de recherche sans fil selon la revendication 1, comportant, en outre :
des moyens de stockage de données vocales de notification pour stocker une multiplicité de données vocales de notification ; et
des moyens d'entrée/sélection de données vocales de notification pour introduire des données vocales de notification dans lesdits moyens de stockage de données vocales de notification, la sélection d'un élément de données d'une multiplicité de données vocales de notification stockées dans lesdits moyens de stockage de données vocales de notification, et son stockage dans lesdits moyens de stockage de données vocales de notification applicables.

3. Dispositif de recherche sans fil selon la revendication 1, comportant, en outre :
des moyens de stockage de codes d'identification précédents pour le stockage de codes d'identification appliqués pour l'identification précédente, et pour l'acheminement d'un code d'identification à appliquer pour la rencontre à venir auxdits moyens de stockage de code d'identification ; et
des moyens de sélection de code d'identification pour sélectionner un code d'identification à appliquer pour la rencontre à venir à partir des codes d'identification stockés dans lesdits moyens de stockage de codes d'identification précédents.

4. Dispositif de recherche sans fil selon la revendication 2, comportant, en outre :
des moyens de stockage de codes d'identification précédents pour stocker un code d'identification appliqué pour l'identification précédente, et pour acheminer un code d'identification à appliquer pour la rencontre à venir auxdits moyens de stockage de code d'identification ; et
des moyens de sélection de code d'identification pour sélectionner un code d'identification à appliquer pour la rencontre à venir à partir des codes d'identification stockés dans lesdits moyens de stockage de codes d'identification précédents.

5. Dispositif de recherche sans fil selon la revendication 1, dans lequel :
lorsque, après l'identification précédente relative à une personne représentant l'autre partie, il faut rechercher ladite personne de nouveau, le code d'identification appliqué pour l'identification précédente peut être appliqué de nouveau.

6. Dispositif de recherche sans fil selon la revendication 2, dans lequel :
lorsque, après l'identification précédente relative à une personne représentant l'autre partie, il faut rechercher ladite personne de nouveau, le code d'identification appliqué pour l'identification précédente peut être appliqué de nouveau.

7. Dispositif de recherche sans fil selon la revendication 3, dans lequel :
lorsque, après l'identification précédente relative à une personne représentant l'autre partie, il faut rechercher ladite personne de nouveau, le code d'identification appliqué pour l'identification précédente peut être appliqué de nouveau.

8. Dispositif de recherche sans fil selon la revendication 4, dans lequel :
lorsque, après l'identification précédente relative à une personne représentant l'autre partie, il faut rechercher ladite personne de nouveau, le code d'identification appliqué pour l'identification précédente peut être appliqué de nouveau.

9. Dispositif de recherche sans fil selon la revendication 1, dans lequel :
lesdits moyens de stockage de code d'identification peuvent stocker une multiplicité de codes d'identification.

10. Dispositif de recherche sans fil selon la revendication 2, dans lequel :
lesdits moyens de stockage de code d'identification peuvent stocker une multiplicité de codes d'identification.

11. Dispositif de recherche sans fil selon la revendication 3, dans lequel :
lesdits moyens de stockage de code d'identification peuvent stocker une multiplicité de codes d'identification.

12. Dispositif de recherche sans fil selon la revendication 4, dans lequel :
lesdits moyens de stockage de code d'identification peuvent stocker une multiplicité de codes d'identification.

13. Dispositif de recherche sans fil comprenant un système pour identifier une correspondance entre un code ID prédéterminé stocké et un code ID reçu, et pour signaler à l'utilisateur la proximité du dispositif qui a transmis le code ID reçu à l'aide de données vocales de notification, le système étant agencé de façon à transmettre automatiquement les données vocales de notification au dispositif proche en réponse à la correspondance, afin de permettre de signaler la proximité mutuelle des deux dispositifs à leurs utilisateurs respectifs à l'aide des mêmes données vocales de notification.
